(19) Europäisches Patentamt
European Patent Office
Office européen des brevets

(11) **EP 3 837 304 B1**

(12) **EUROPÄISCHE PATENTSCHRIFT**

(45) Veröffentlichungstag und Bekanntmachung des Hinweises auf die Patenterteilung:
**24.11.2021 Patentblatt 2021/47**

(21) Anmeldenummer: **18756238.4**

(22) Anmeldetag: **17.08.2018**

(51) Int Cl.:
***C08G 77/20*** (2006.01)  ***C08L 83/04*** (2006.01)

(86) Internationale Anmeldenummer:
**PCT/EP2018/072355**

(87) Internationale Veröffentlichungsnummer:
**WO 2020/035151 (20.02.2020 Gazette 2020/08)**

(54) **VERNETZBARE ORGANOSILOXAN-ZUSAMMENSETZUNGEN**

CROSSLINKABLE ORGANOYSILOXANE COMPOSITIONS

COMPOSITIONS D'ORGANOSILOXANES RÉTICULABLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.06.2021 Patentblatt 2021/25**

(73) Patentinhaber: **Wacker Chemie AG
81737 München (DE)**

(72) Erfinder: **OSTENDORF, Detlev
01129 Dresden (DE)**

(74) Vertreter: **Budczinski, Angelika et al
Wacker Chemie AG
Intellectual Property
Hanns-Seidel-Platz 4
81737 München (DE)**

(56) Entgegenhaltungen:
**WO-A1-2014/065432**

• **DATABASE WPI Week 201181 Thomson Scientific, London, GB; AN 2011-P88510 XP002790488, -& JP 2011 246680 A (SHINETSU CHEM IND CO LTD) 8. Dezember 2011 (2011-12-08)**

**Beschreibung**

Die Erfindung betrifft durch Hydrosilylierungsreaktion vernetzbare Organopolysiloxan-Zusammensetzungen, Verfahren zu deren Herstellung sowie deren Verwendung und daraus erhältliche Vulkanisate.

Organopolysiloxanharze, die reaktive Einheiten mit aliphatischen Kohlenstoff-Kohlenstoff-Mehrfachbindungen enthalten können mit geeigneten Kopplern, welche über zwei Si-H-Gruppen verfügen, oder mit geeigneten Vernetzern mit mindestens drei Si-H-Gruppen, die in Gegenwart von - zumeist platinhaltigen - Katalysatoren durch Hydrosilylierungs- bzw. Additionsreaktion vernetzt werden. In US-B 6,689,859 und US-B 6,310,146 werden Vulkanisat-Eigenschaften von Mischungen aus einem Silsesquioxan-Copolymer mit einer mittleren Zusammensetzung $(PhSiO_{3/2})_{0,75}(ViMe_2SiO_{1/2})_{25}$ und divalenten SiH-Kopplern, wie Diphenylsilan (US-B 6,689,859, Sample 1), 1,1,3,3,5,5-Hexmethyltrisiloxan (US-B 6,689,859, Sample 5) bzw. 1,4-Bis(dimethylsi-lyl)benzol (US-B 6,310,146, Beispiel 1) beschrieben, die in Gegenwart eines Platinkatalysators vernetzt werden. Der Nachteil der vulkanisierten Mischungen besteht darin, dass sie entweder einen niedrigen Elastizitätsmodul oder ein sprödes Bruchverhalten, einhergehend mit geringeren Fließeigenschaften des Polymernetzwerkes, aufweisen. Die geringen Fließeigenschaften und dadurch bedingt die niedrigere Bruchzähigkeit des Materials sind ebenfalls erkennbar an einer Druckversuchskurve an einem hohen Wert für das Fließverhältnis.

US-B 8,927,673 beschreibt ein einfaches Verfahren zur gezielten Herstellung von leiter- oder käfigartigen Polysilsesquioxanen durch basenkatalysierte Hydrolyse und Polymerisation von Trialkoxysilanen in einem organischen Lösungsmittel. Dabei werden auch Beispiele zur Synthese von Copolymeren aufgeführt, beispielsweise durch Hydrolyse und Cokondensation von Phenyltrimethoxysilan und 3-Acryloxypropyltrimethoxysilan (Beispiel 13, Absatz [0084]). Ein Nachteil dieses Verfahrens besteht jedoch darin, dass sich das Gewichtsmittel Mw der "leiterartigen" Polysilsesquioxane nur eingeschränkt durch die Reaktionsbedingungen einstellen lässt, sodass die erhaltenen Polysilsesquioxane eher hohe Gewichtsmittel Mw sowie breite Gewichtsverteilungen, erkennbar an dem hohen Wert für die Polydispersität Mw/Mn von größer 2, aufweisen. Möglichkeiten zur Copolymerisation von Trialkoxyorganosilanen mit Monoalkoxytriorganosilanen zur gezielten Steuerung des Gewichtsmittels Mw werden in US-B 8,927,673 nicht aufgezeigt. WO 2014/065432 A1 beschreibt eine durch Hydrolsilylierungsreaktion vernetzbare Zusammensetzung. US 2011/177342 A1 sowie US 2008/318067 A1 beschreiben durch Hydrosilylierungsreaktion vernetzbare Zusammensetzungen.

Gegenstand der Erfindung sind durch Hydrosilylierungsreaktion vernetzbare Zusammensetzungen enthaltend

(A) Organopolysiloxane enthaltend Einheiten der Formeln

$$R_2R^1SiO_{1/2} \qquad (I)$$

und

$$R^2(OR^3)_aSiO_{(3-a)/2} \qquad (II),$$

worin

R gleich oder verschieden sein kann und von aliphatischen Kohlenstoff-Kohlenstoff-Mehrfachbindungen freie Kohlenwasserstoffreste bedeutet,

$R^1$ einwertige Kohlenwasserstoffreste mit aliphatischen Kohlenstoff-Kohlenstoff-Mehrfachbindungen bedeutet,

$R^2$ von aliphatischen Kohlenstoff-Kohlenstoff-Mehrfachbindungen freie, aromatische Kohlenwasserstoffreste bedeutet,

$R^3$ gleich oder verschieden sein kann und Wasserstoffatom oder Alkylrest bedeutet und

a 0, 1 oder 2, bevorzugt 0 oder 1, ist,

mit der Maßgabe, dass

in den Organopolysiloxanen (A) die Summe der Einheiten der Formel (I), bezogen auf die Summe aller Einheiten der Formeln (I) und (II), 0,15 bis 0,24, bevorzugt 0,17 bis 0,23, besonders bevorzugt 0,18 bis 0,22, beträgt,

in den Organopolysiloxanen (A) die Summe der Einheiten der Formel (II) mit a>0, bezogen auf die Summe aller Einheiten der Formeln (I) und (II), höchstens 0,08, bevorzugt höchstens 0,06, besonders bevorzugt höchstens 0,04, insbesondere höchstens 0,02, beträgt,

Organopolysiloxane (A) durchschnittlich 10 bis 20, bevorzugt 11 bis 18, besonders bevorzugt 12 bis 17, Siliciumatome enthalten, Organopolysiloxane (A) eine Polydispersität Mw/Mn von 1,05 bis 1,40 aufweisen und Organopolysiloxane (A) pro Molekül eine durchschnittliche Anzahl an Resten $R^1$, angegeben in mol ($R^1$)/mol, von 1,1 bis 3,8, bevorzugt 1,5 bis 3,5, besonders bevorzugt 1,8 bis 3,3, insbesondere von 2,0 bis 3,0, aufweisen.

(B) Organosiliciumverbindungen mit zwei Si-gebundenen Wasserstoffatomen und

(C) die Anlagerung von Si-gebundenem Wasserstoff an aliphatische Mehrfachbindung fördernde Katalysatoren.

Bevorzugt handelt es sich bei Rest R um den Methylrest oder den Phenylrest, bevorzugt den Methylrest.

Bevorzugt handelt es sich bei Rest $R^1$ um den Vinyl-, Bicycloheptenyl-, 3a,4,5,6,7,7a-hexahydro-4,7-methano-1H-indenyl- oder 2-Propenylrest, besonders bevorzugt um den Vinylrest.

Bevorzugt handelt es sich bei Rest $R^2$ um den Phenyl-, o-, m- oder p-Tolylrest oder den Benzylrest, bevorzugt den Phenylrest.

Bevorzugt handelt es sich bei Rest $R^3$ um Wasserstoffatom, den Methyl- oder den Ethylrest, besonders bevorzugt um Wasserstoffatom.

Bevorzugt handelt es sich bei der erfindungsgemäß eingesetzten Komponente (A) um Organopolysiloxane bestehend aus Einheiten der Formeln

$$R_2R^1SiO_{1/2} \qquad (V),$$

$$R^2SiO_{3/2} \qquad (VI)$$

sowie gegebenenfalls Einheiten ausgewählt aus der Gruppe bestehend aus Einheiten der Formeln

$$R^2(OR^3)SiO_{2/2} \qquad (VII)$$

und

$$R^2(OR^3)_2SiO_{1/2} \qquad (VIII),$$

worin R, $R^1$, $R^2$ und $R^3$ eine der obengenannten Bedeutungen haben, mit der Maßgabe, dass
in den Organopolysiloxanen (A) die Summe der Einheiten der Formel (V), bezogen auf die Summe aller Einheiten der Formeln (V), (VI), (VII) und (VIII) 0,15 bis 0,24, bevorzugt 0,17 bis 0,23, besonders bevorzugt 0,18 bis 0,22, beträgt,
in den Organopolysiloxanen (A) die Summe der Einheiten der Formeln (VII) und (VIII), bezogen auf die Summe aller Einheiten der Formeln (V), (VI), (VII) und (VIII), höchstens 0,08, bevorzugt höchstens 0,06, besonders bevorzugt höchstens 0,04, insbesondere höchstens 0,02, beträgt,
Organopolysiloxane (A) durchschnittlich 10 bis 20, bevorzugt 11 bis 18, besonders bevorzugt 12 bis 17, Siliciumatome enthalten,
Organopolysiloxane (A) eine Polydispersität Mw/Mn von 1,05 bis 1,40 aufweisen,
Organopolysiloxane (A) pro Molekül eine durchschnittliche Anzahl an Resten $R^1$, angegeben in mol($R^1$)/mol, von 1,5 bis 3,0, bevorzugt 1,8 bis 2,8, besonders bevorzugt 2,0 bis 2,6, aufweisen und
Organopolysiloxane (A) pro Molekül eine durchschnittliche Anzahl an Resten $R^1$, angegeben in mol ($R^1$)/mol, von 1,1 bis 3,8, bevorzugt 1,5 bis 3,5, besonders bevorzugt 1,8 bis 3,3, insbesondere von 2,0 bis 3,0, aufweisen.

Ein weiterer Gegenstand der Erfindung sind Organopolysiloxane bestehend aus Einheiten der Formeln

$$R_2R^1SiO_{1/2} \qquad (V),$$

$$R^2SiO_{3/2} \qquad (VI)$$

sowie gegebenenfalls Einheiten ausgewählt aus der Gruppe bestehend aus Einheiten der Formeln

$$R^2(OR^3)SiO_{2/2} \qquad (VII)$$

und

$$R^2(OR^3)_2SiO_{1/2} \qquad (VIII),$$

worin R, $R^1$, $R^2$ und $R^3$ eine der obengenannten Bedeutungen haben, mit der Maßgabe, dass
in den Organopolysiloxanen (A) die Summe der Einheiten der Formel (V), bezogen auf die Summe aller Einheiten der Formeln (V), (VI), (VII) und (VIII), 0,15 bis 0,24, bevorzugt 0,17 bis 0,23, besonders bevorzugt 0,18 bis 0,22, beträgt,

in den Organopolysiloxanen (A) die Summe der Einheiten der Formeln (VII) und (VIII), bezogen auf die Summe aller Einheiten der Formeln (V), (VI), (VII) und (VIII), höchstens 0,08, bevorzugt höchstens 0,06, besonders bevorzugt höchstens 0,04, insbesondere höchstens 0,02, beträgt,

Organopolysiloxane (A) durchschnittlich 10 bis 20, bevorzugt 11 bis 18, besonders bevorzugt 12 bis 17, Siliciumatome enthalten,

Organopolysiloxane (A) eine Polydispersität $M_w/M_n$ von 1,05 bis 1,40 aufweisen und

Organopolysiloxane (A) pro Molekül eine durchschnittliche Anzahl an Resten $R^1$, angegeben in $mol(R^1)/mol$, von 1,1 bis 3,8, bevorzugt 1,5 bis 3,5, besonders bevorzugt 1,8 bis 3,3, insbesondere von 2,0 bis 3,0, aufweisen.

Die erfindungsgemäß eingesetzten Organopolysiloxane (A) weisen ein Gewichtsmittel $M_w$ von vorzugsweise 1000 bis 2100 g/mol, bevorzugt von 1150 bis 1900 g/mol, besonders bevorzugt von 1350 bis 1850 g/mol, auf.

Die erfindungsgemäß eingesetzten Organopolysiloxane (A) weisen ein Zahlenmittel $M_n$ von vorzugsweise 1100 bis 1500 g/mol, bevorzugt von 1100 bis 1450 g/mol, besonders bevorzugt von 1150 bis 1400 g/mol, auf.

Die erfindungsgemäß eingesetzten Organopolysiloxane (A) weisen eine Polydispersität $M_w/M_n$ bevorzugt von 1,05 bis 1,30, besonders bevorzugt von 1,05 bis 1,25, insbesondere von 1,10 bis 1,20, auf.

Beispiele für bevorzugte Organopolysiloxane (A) sind $(PhSiO_{3/2})_{0,79}(MePhViSiO_{1/2})_{0,21}$;

mit $M_w$ = 1730 g/mol, $M_n$ = 1380 g/mol und $M_w/M_n$ = 1,25; $(PhSiO_{3/2})_{0,78}(Me_2ViSiO_{1/2})_{0,22}$;

mit $M_w$ = 1480 g/mol, $M_n$ = 1240 g/mol und $M_w/M_n$ = 1,19; und $(PhSiO_{3/2})_{0,80}(Me_2ViSiO_{1/2})_{0,20}$;

mit $M_w$ = 1600 g/mol, $M_n$ = 1310 g/mol und $M_w/M_n$ = 1,22;

wobei Me gleich Methylrest, Vi gleich Vinylrest und Ph gleich Phenylrest bedeutet.

Besonders bevorzugt handelt es sich bei den aliphatisch ungesättigten Organopolysiloxanen (A) um solche hergestellt durch Umsetzung (Verfahren A) von

(i) Organylalkoxysilanen der allgemeinen Formeln

$$R_2R^1(OR^3)Si \qquad (III)$$

und

$$R^2(OR^3)_3Si \qquad (IV),$$

wobei R, $R^1$, $R^2$ und $R^3$ die oben genannte Bedeutung haben, mit

(ii) Wasser in Mengen von 1,0 bis 10,0 Mol, bevorzugt von 2,0 bis 5,0 Mol, besonders bevorzugt von 2,5 bis 4,0 Mol, insbesondere von 2,9 bis 3,5 Mol, jeweils bezogen auf 1 Mol Organylalkoxysilan (i) der Formel (IV),

in Gegenwart von

(iii) basischer Verbindung, vorzugsweise in Mengen von 0,01 bis 5,0 Gewichtsteilen, bevorzugt von 0,05 bis 2,0 Teilen, besonders bevorzugt 0,1 bis 1,5 Teilen, insbesondere 0,2 bis 1,0 Teilen, jeweils bezogen auf 100 Teile Organylalkoxysilane (i) der Formel (IV),

gegebenenfalls in Anwesenheit von

(iv) mit Wasser mischbaren organischen Lösungsmitteln.

Beispiele für Organylalkoxysilan (i) der Formel (IV) sind Phenyltrimethoxysilan, Phenyltriethoxysilan, o-, m- oder p-Tolyltrimethoxysilan, o-, m- oder p-Tolyltriethoxysilan, Benzyltrimethoxysilan und Benzyltriethoxysilan, wobei Phenyltrimethoxysilan bevorzugt ist.

Beispiele für Organylalkoxysilan (i) der Formel (III) sind, Dimethyl(vinyl)methoxysilan, Dimethyl(vinyl)ethoxysilan, Dimethyl(bicycloheptenyl)methoxysilan, Dimethyl(bicycloheptenyl)-ethoxysilan, Dimethyl(3a,4,5,6,7,7a-hexahydro-4,7-methano-1H-indenyl)methoxysilan, Dimethyl(3a,4,5,6,7,7a-hexahydro-4,7-methano-1H-indenyl)ethoxysilan, Methyl(phenyl)(vinyl)methoxysilan, Methyl(phenyl)(vinyl)ethoxysilan, (2-Propenyl)dimethylmethoxysilan, (2-Propenyl)dimethylethoxysilan, wobei Methyl-(phenyl)(vinyl)methoxysilan, Methyl(phenyl)(vinyl)ethoxysilan, Dimethyl(vinyl)methoxysilan oder Dimethyl(vinyl)ethoxysilan bevorzugt sind.

Beispiele für Wasser (ii) sind natürliche Wässer, wie z.B. Regenwasser, Grundwasser, Quellwasser, Flusswasser und Meerwasser, chemische Wässer, wie z.B. vollentsalztes Wasser, destilliertes oder (mehrfach) redestilliertes Wasser, Wässer für medizinische oder pharmazeutische Zwecke, wie z.B. gereinigtes Wasser (Aqua purificata; Pharm. Eur. 3), Aqua deionisata, Aqua destillata, Aqua bidestillata, Aqua ad injectionam oder Aqua conservata, Trinkwasser nach deutscher Trinkwasserverordnung und Mineralwässer.

Beispiele für basische Verbindungen (iii) sind Alkali- und Erdalkalihydroxid, Alkali- und Erdalkalicarbonat, Alkali- und Erdalkalihydrogencarbonat, Alkali- und Erdalkalialkoholat, Amidine, wie 1,4,5,6-Tetrahydropyrimidin, 1,5-Diazabicyclo[4.3.0]-non-5-en (DBN), 1,8-Diazabicyclo[5.3.0]dec-7-en, 1,8-Diazabicyclo[5.4.0]undec-7-en (DBU); Iminoharnstoffe, wie Guanidin, N-Methylguanidin, N,N'-Dimethylguanidin, N,N,N',N'-Tetramethyl-guanidin (TMG), 1-Phenylguanidin, 1,5,7-Triazabicyclo[4.4.0]-dec-5-en (TBD) und 7-Methyl-1,5,7-triazabicyclo(4.4.0)dec-5-en.

Bevorzugt handelt es sich bei den basischen Verbindungen (iii) um TMG, TBD, Alkali- oder Erdalkalicarbonat, oder Alkali- oder Erdalkalihydrogencarbonat, wobei Alkalicarbonate besonders bevorzugt sind, insbesondere Kaliumcarbonat oder Cäsiumcarbonat.

Falls für die Herstellung der Organopolysiloxane (A) nach Verfahren A Lösungsmittel (iv) eingesetzt werden, handelt es sich bevorzugt um solche organische Lösungsmittel, in die bei 20°C und 1013 hPa mindestens 10 Gew.-%, bevorzugt mindestens 30 Gew.-%, besonders bevorzugt mindestens 50 Gew.-%, insbesondere unbegrenzt, Wasser (ii) gelöst werden kann.

Falls für die Herstellung der Organopolysiloxane (A) nach Verfahren A Lösungsmittel (iv) eingesetzt werden, handelt es sich besonders bevorzugt um Ketone, wie Aceton, Ethylmethylketon, Diethylketon, Cyclohexanon; Nitrile, wie Acetonitril, 3-Methoxypropionitril; Acetale, wie Methylal, 1,3-Dioxolan, 1,3,5-Trioxan, und Glycerinformal; Ester, wie Ethylenglykoldiacetat, gamma-Butyrolacton, 2-Methoxy-1-propylacetat, 1-Methoxy-2-propylacetat, Methylacetoacetat, Ethylacetoacetat, Methylacetat; Ether, wie Tetrahydrofuran, 2-Methyltetrahydrofuran, Ethylmethylether, 1,4-Dioxan, Tetrahydropyran, Di-, Tri- oder Tetraethylenglycoldimethylether; sowie Dimethylsulfoxid; oder deren Gemische.

Falls für die Herstellung der Organopolysiloxane (A) nach Verfahren A Lösungsmittel (iv) eingesetzt werden, handelt es sich besonders bevorzugt um Ketone, wie Aceton, Ethylmethylketon, Diethylketon, Cyclohexanon, und Nitrile, wie Acetonitril sowie 3-Methoxypropionitril; insbesondere um Aceton und Acetonitril, sowie deren Gemische.

Bevorzugt werden für die Herstellung der Organopolysiloxane (A) nach Verfahren A Lösungsmittel (iv) eingesetzt.

Die erfindungsgemäß eingesetzten Organopolysiloxane (A) werden nach Verfahren A durch Hydrolyse der Organylalkoxysilane (i) der Formeln (III) und (IV) mit Wasser (ii) und Cokondensation gegebenenfalls in Lösungsmittel (iv) in Gegenwart von basischer Verbindung (iii) erhalten. Die Herstellung der erfindungsgemäß eingesetzten Organopolysiloxane (A) kann dabei in der Weise erfolgen, dass zunächst die Mischung von Organylalkoxysilan (i) der Formel (IV) und Wasser (ii) mit so viel Lösungsmittel (iv) versetzt wird, bis eine homogene Mischung entsteht, dann basische Verbindung (iii) zugegeben wird und anschließend - entweder bei einsetzender Trübung oder nach einer gewissen Reaktionszeit, z.B. nach 45 Minuten - Organylalkoxysilan (i) der Formel (III) hinzugefügt wird. Alternativ kann bei Verfahren A basische Verbindung (iii) aber auch mit Wasser (ii) und/oder Lösungsmittel (iv) vorgemischt werden. Außerdem kann zunächst eine homogene Mischung von Organylalkoxysilanen (i) der Formeln (III) und (IV), Wasser (ii) und Lösungsmittel (iv) vorgelegt werden, zu der anschließend basische Verbindung (iii) hinzugefügt wird, oder basische Verbindung (iii) wird als Mischung mit Wasser (ii) und/oder Lösungsmittel (iv) hinzugefügt.

Es ist auch möglich, was aber nicht bevorzugt ist, eine geringere Menge Lösungsmittel (iv) einzusetzen, sodass das Reaktionsgemisch nicht homogen ist, sondern aus einer organischen und einer wässrigen Phase besteht.

Zur Herstellung der erfindungsgemäßen Organopolysiloxane (A) gemäß Verfahren A werden pro Mol Organylalkoxysilan (i) der Formel (III) vorzugsweise 2,0 bis 5,0 Mol, bevorzugt 2,5 bis 4,5 Mol besonders bevorzugt 2,8 bis 4,0 Mol, insbesondere 3,0 bis 3,5 Mol, Organylalkoxysilane (i) der Formel (IV) eingesetzt.

In einer bevorzugten Ausführungsform des Verfahrens A werden Organosiliciumverbindungen (i) der Formeln (III) und (IV), und gegebenenfalls Lösungsmittel (iv) vorgelegt, anschließend wird eine Mischung von basischer Verbindung (iii) mit Wasser (ii) hinzugefügt.

In einer weiteren bevorzugten Ausführungsform des Verfahrens A werden Organylalkoxysilan (i) der Formel (IV) und gegebenenfalls Lösungsmittel (iv) vorgelegt, dann wird eine Mischung von basischer Verbindung (iii) und Wasser (ii) und anschließend Organylalkoxysilan (i) der Formel (III) hinzugefügt.

In einer weiteren bevorzugten Ausführungsform des Verfahrens A werden gegebenenfalls Lösungsmittel (iv), Wasser (ii) und basische Verbindung (iii) vorgelegt, dann werden gegebenenfalls als Mischung mit Lösungsmittel (iv) nacheinander Organylalkoxysilan (i) der Formel (IV) und anschließend Organylalkoxysilan (i) der Formel (III) hinzugefügt.

Die Herstellung der erfindungsgemäß eingesetzten Organopolysiloxane (A) erfolgt vorzugsweise bei Temperaturen im Bereich von -20 bis 100°C, bevorzugt bei Temperaturen im Bereich von -10 bis 90°C, besonders bevorzugt bei Temperaturen von 0 bis 80°C, insbesondere bei Temperaturen im Bereich von 10 bis 60°C. Ganz besonders bevorzugt wird bei der Temperatur gemischt, die sich beim Vermischen bei Umgebungstemperatur aus der Temperatur der Rohstoffe, der Reaktionswärme und der Temperaturerhöhung durch den Energieeintrag beim Mischen ergibt, wobei nach Bedarf geheizt oder gekühlt werden kann. Das Vermischen erfolgt vorzugsweise beim Druck der umgebenden Atmosphäre, also etwa 900 bis 1100 hPa. Es ist aber auch möglich, zeitweilig oder ständig unter vermindertem oder erhöhtem Druck zu mischen, wie z.B. bei 500 bis 3000 hPa Absolutdruck.

Das Verfahren A kann kontinuierlich, diskontinuierlich oder semikontinuierlich durchgeführt werden, bevorzugt wird es diskontinuierlich durchgeführt.

Bei der Umsetzung der Organylalkoxysilane (i) mit Wasser (ii) in Gegenwart von basischer Verbindung (iii) und gegebenenfalls in Lösungsmittel (iv) entstehen üblicherweise Gemische verschiedener Organopolysiloxane (A). Darüber hinaus können Disiloxane $R_2R^1Si-O-SiR_2R^1$, sowie in untergeordnetem Maße auch niedermolekulare oder hochmolekulare lineare oder verzweigte Strukturen, wie $R^2Si(OR^3)(OSiR_2R^1)_2$, $R^2Si(OR^3)_2(OSiR_2R^1)$, $R^2Si(OSiR_2R^1)_3$, und $[(R^2SiO_{2/2}(OSiR_2R^1))_n(R^2SiO_{1/2}(OR^3)_2)_2]$ und $[(R^2SiO_{2/2}(OSiR_2R^1))_n(R^2SiO_{1/2}(OSiR_2R^1)(OR^3))_2]$ mit n=3-7 oder größer 20 oder niedermolekulare cyclische Strukturen, wie $[R^2SiO_{2/2}(OSiR_2R^1)]_{3-4}$, als Nebenprodukte entstehen, wobei die Reste die oben angegebenen Bedeutungen haben.

Nach erfolgter Umsetzung kann das Reaktionsgemisch entweder im Vakuum entflüchtigt oder vorher wässrig aufgearbeitet werden. Falls eine Isolierung oder Anreicherung bestimmter Spezies der Reaktionsmischung gewünscht ist, erfolgt diese vorzugsweise durch Kristallisation.

Anschließend an die Herstellung von Organopolysiloxanen (A) kann ein weiterer Verfahrensschritt durchgeführt werden, was bevorzugt ist, um den Gehalt an gegebenenfalls noch vorhandenen $(OR^3)$-Gruppen zu verringern, wobei $R^3$ die oben angegebene Bedeutung hat. Zu diesem Zweck können die durch Umsetzung der Silane (i) mit Wasser (ii) in Gegenwart von basischen Verbindungen (iii) und gegebenenfalls in Anwesenheit von organischem Lösungsmittel (iv) erhaltenen Organopolysiloxane (A) mit mindestens einer gegenüber Organyloxy- oder Hydroxyresten reaktiven Verbindung (v) in einem organischen Lösungsmittel, ausgewählt aus Ether, gesättigten und aromatischen Kohlenwasserstoffen umgesetzt werden, z.B. mit Monochlorsilanen oder in einer Piers-Rubinsztajn-Reaktion mit reaktiven Silanen in Gegenwart von Tris(pentafluorophenyl)boran als Katalysator.

Im Anschluss an den gegebenenfalls durchgeführten zusätzlichen Verfahrensschritt des Verfahrens A kann das Reaktionsgemisch entweder im Vakuum entflüchtigt oder vorher wässrig aufgearbeitet werden. Falls eine Isolierung oder Anreicherung bestimmter Spezies der Reaktionsmischung gewünscht ist, erfolgt diese vorzugsweise durch Kristallisation.

Bei der erfindungsgemäß eingesetzten Komponente (B) kann es sich um beliebige und bisher bekannte Organosiliciumverbindungen handeln, die zwei Si-gebundene Wasserstoffatome aufweisen, wie z.B. SiH-funktionelle Silane und Siloxane.

Bevorzugt handelt es sich bei Koppler (B) um Organosiliciumverbindungen enthaltend Einheiten der Formel

$$R^4_eH_fR^5_gSiO_{(4-e-f-g)/2} \qquad (IX),$$

worin

R$^4$ gleich oder verschieden sein kann und einen einwertigen oder zweiwertigen, SiC-gebundenen, gegebenenfalls substituierten, gesättigten Kohlenwasserstoffrest bedeutet,

R$^5$ gleich oder verschieden sein kann und einen einwertigen oder zweiwertigen, SiC-gebundenen, gegebenenfalls substituierten, aromatischen, aliphatisch gesättigten Kohlenwasserstoffrest bedeutet,

e 0, 1, 2 oder 3, bevorzugt 0, 1 oder 2, besonders bevorzugt 1 oder 2, ist,

f 0, 1 oder 2, bevorzugt 1 oder 2, ist und

g 0, 1 oder 2, bevorzugt 1 oder 2, ist,

mit der Maßgabe, dass e+f+g $\leq$ 4 ist und pro Molekül zwei Si-gebundene Wasserstoffatome anwesend sind.

Bevorzugt enthalten Koppler (B) pro Molekül mindestens einen Rest R$^5$, besonders bevorzugt 1 bis 4, insbesondere 1 bis 2, Reste R$^5$.

Bevorzugt enthalten Koppler (B) pro Molekül mindestens einen Rest R$^5$ gleich einem zweiwertigen, SiC-gebundenen, aromatischen, aliphatisch gesättigten Kohlenwasserstoffrest, der insbesondere zwei Einheiten der Formel (IX) miteinander verbindet.

Beispiele für Reste R$^4$ sind Alkylreste, wie der Methyl-, Ethyl-, n-Propyl-, iso-Propyl-, 1-n-Butyl-, 2-n-Butyl-, iso-Butyl-, tert-Butyl-, n-Pentyl-, iso-Pentyl-, neo-Pentyl-, tert-Pentylrest; Hexylreste, wie der n-Hexylrest; Heptylreste, wie der n-Heptylrest; Octylreste, wie der n-Octylrest und iso-Octylreste, wie der 2,4,4-Trimethylpentyl- und der 2,2,4-Trimethylpentylrest; Nonylreste, wie der n-Nonylrest; Decylreste, wie der n-Decylrest; Dodecylreste, wie der n-Dodecylrest; Hexadecylrest, wie der n-Hexadecylrest; Octadecylreste, wie der n-Octadecylrest; Cycloalkylreste, wie der Cyclopentyl-, Cyclohexyl-, Cycloheptylrest und Methylcyclohexylrest, sowie der Methylen-, Ethylen-, Dimethylmethylen-, Methylmethylen-, Phenylmethylen- und Diphenylmethylenrest, bevorzugt der Methylrest.

Beispiele für Reste R$^5$ sind Arylreste, wie der Phenyl-, Biphenyl-, Naphthyl-, Anthryl- und Phenanthrylrest; Alkaryl-reste, wie o-, m-, p-Tolylreste; Xylylreste und Ethylphenyl-reste; und Aralkylreste, wie der Benzylrest, der $\alpha$- und der $\beta$-Phenylethylrest, der 2-(2-Methylphenyl)ethylrest, der 2-(3-Methylphenyl)-ethylrest, 2-(4-Methylphenyl)ethylrest, der 2-Phenylpropenylrest und der 2-Phenyl-iso-propenylrest, sowie der Phenylen-, Methyl(phenyl)methylenrest, Phenylmethylen-, Diphenylmethylenrest, $-(C_6H_4)-CH_2-(C_6H_4)-$, $-(C_6H_4)-C(CH_3)_2-(C_6H_4)-$, $-(C_6H_4)-C(CH_3)H-(C_6H_4)-$, $-(C_6H_4)-C(C_6H_5)H-(C_6H_4)-$, $-(C_6H_4)-C(C_6H_5)Me-(C_6H_4)-$, $-(C_6H_4)-C(C_6H_5)_2-(C_6H_4)-$, $-(C_6H_4)-O-(C_6H_4)-$,

-(C$_6$H$_4$)-S-(C$_6$H$_4$)-, sowie ein- oder zweiwertiger Biphenyl-, Naphthalin-, Anthracen- oder Phenanthrenrest, wobei der Phenylrest, der zweiwertige Biphenylenrest oder der Phenylenrest bevorzugt sind.

Beispiele für Koppler (B) sind Phenylsilane, wie Diphenylsilan (CAS 775-12-2) oder Methylphenylsilan (CAS 766-08-5); Koppler mit Siloxaneinheiten, wie 1,1,3-Trimethyl-3-phenyldisiloxan, 1,5-Dimethyl-1,3,3,5-tetraphenyltrisiloxan, 1,3-Dimethyl-1,3-diphenyl-disiloxan (CAS 6689-22-1), 1,1,3,3-Tetraphenyl-disiloxan, 1,1,5,5-Tetramethyl-3,3-diphenyltrisiloxan, 1,1,3,5,5-Pentamethyl-3-phenyltrisiloxan, 1,1,3,3-Tetramethyldisiloxan, 1,1,3,3,5,5-Hexamethyltrisiloxan; Koppler mit Phenylen- und zweiwertigen Biphenyleinheiten, wie 1,4-Bis(dimethylsilyl)benzol (CAS 2488-01-9), 1,4-Bis(methylphenylsilyl)benzol, 4,4'-Bis(dimethylsilyl)-1,1'-biphenyl, Bis(4'-(dimethylsilyl)-[1,1'-biphenyl]-4-yl)dimethylsilan, 4,4'-Bis(methylphenylsilyl)-1,1'-biphenyl, Bis(4-(dimethylsilyl)phenyl)dimethylsilan, Bis(4-(dimethylsilyl)phenyl)(ethyl)methylsilan, Bis(4-(dimethylsilyl)phenyl)diethylsilan, Bis(4-(dimethylsilyl)phenyl)di-n-butylsilan, Bis(4-(dimethylsilyl)phenyl)di-tert-butylsilan, Bis-(4-(dimethylsilyl)phenyl)dipropylsilan, Bis(4-(dimethylsilyl)-phenyl)di-iso-propylsilan, Bis-(4-(dimethylsilyl)phenyl)methan, 2,2-Bis(4-(dimethylsilyl)phenyl)propan; Koppler mit zweiwertigen mehrcyclischen aromatischen Kohlenwasserstoffen, wie 9,10-Bis(dimethylsilyl)anthracen, 1,4-Bis(dimethylsilyl)naphthalin, 1,5-Bis(dimethylsilyl)naphthalin, 2,6-Bis(dimethylsilyl)naphthalin, 1,8-Bis(dimethylsilyl)naphthalin, 1,6-Bis(dimethylsilyl)naphthalin oder 1,7-Bis(dimethylsilyl)naphthalin; sowie Bis(4-(dimethylsilyl)phenyl)ether und Bis(4-(dimethylsilyl)phenyl)sulfid.

Bevorzugt handelt es sich bei Koppler (B) um Organosiliciumverbindungen wie Diphenylsilan, 1,3-Dimethyl-1,3-diphenyl-disiloxan, 1,1,5,5-Tetramethyl-3,3-diphenyltrisiloxan, 1,4-Bis(dimethylsilyl)benzol, 4,4'-Bis(dimethylsilyl)-1,1'-biphenyl, Bis-(4'-(dimethylsilyl)-[1,1'-biphenyl]-4-yl)dimethylsilan, Bis(4-(dimethylsilyl)phenyl)dimethylsilan, Bis(4-(dimethylsilyl)phenyl)methan, Bis(4-(dimethylsilyl)phenyl)ether oder Bis(4-(dimethylsilyl)phenyl) sulfid.

Besonders bevorzugt handelt es sich bei Organosiliciumkomponente (B) um Diphenylsilan, 1,4-Bis(dimethylsilyl)benzol, 1,3-Dimethyl-1,3-diphenyl-disiloxan, 1,1,5,5-Tetramethyl-3,3-diphenyltrisiloxan, 4,4'-Bis(dimethylsilyl)-1,1'-biphenyl, Bis(4-(dimethylsilyl)phenyl)dimethylsilan, insbesondere um 1,4-Bis(dimethylsilyl)benzol, 4,4'-Bis(dimethylsilyl)-1,1'-biphenyl, 1,3-Dimethyl-1,3-diphenyl-disiloxan oder Bis(4-(dimethylsilyl)-phenyl)dimethylsilan.

Bei Koppler (B) handelt es sich um handelsübliche Produkte bzw. können sie nach in der Chemie gängigen Verfahren hergestellt werden, z.B. durch Grignard-Reaktion.

In den erfindungsgemäßen Zusammensetzungen werden Komponenten (A), (B) und gegebenenfalls (F) in solchen Mengen eingesetzt, dass das Molverhältnis von Si-gebundenem Wasserstoff zu aliphatisch ungesättigten Kohlenstoff-Kohlenstoff-Mehrfachbindungen vorzugsweise 0,80 bis 1,20, bevorzugt 0,85 bis 1,10, besonders bevorzugt 0,90 bis 1,10, insbesondere 0,95 bis 1,05, beträgt. Als Katalysatoren (C) können alle Katalysatoren eingesetzt werden, die auch bisher zur Anlagerung von Si-gebundenem Wasserstoff an aliphatische Mehrfachbindung eingesetzt wurden.

Beispiele für Katalysatoren (C) sind Metalle, wie Platin, Rhodium, Palladium, Ruthenium und Iridium, vorzugsweise Platin, die gegebenenfalls auf feinteiligen Trägermaterialien, wie Aktivkohle, Aluminiumoxid oder Siliciumdioxid, fixiert sein können.

Vorzugsweise werden als Katalysator (C) Platin sowie dessen Verbindungen und Komplexe verwendet.

Beispiele für solche Platinkatalysatoren (C) sind metallisches und feinverteiltes Platin, das sich auf Trägern, wie Siliciumdioxid, Aluminiumoxid oder Aktivkohle befinden kann, Verbindungen oder Komplexe von Platin, wie Platinhalogenide, z.B. PtCl$_4$, H$_2$PtCl$_6$.6H$_2$O, Na$_2$PtCl$_4$·4H$_2$O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H2PtCl6.6H2O und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe gemäß EP-B 110 370 sowie Platin-Komplexe mit N-heterocyclischen Carbenen (NHC) wie [1,3-Bis(2,6-diisopropylphenyl)imidazol-2-yliden][1,3-divinyl-1,1,3,3-tetramethyldisiloxan]platin(0) (CAS 849830-54-2), [1,3-Bis(2,6-diisopropylphenyl)-imidazolidinyliden] [1,3-divinyl-1,1,3,3-tetramethyldisiloxan]platin(0) (CAS 873311-51-4), [1,3-Bis(cyclohexyl)imidazol-2-yliden] [1,3-divinyl-1,1,3,3-tetramethyldisiloxan]platin(0) (CAS 400758-55-6), 1,3-Bis-(2,4,6-trimethylphenyl)-3,4,5,6-tetrahydropyrimidin-1-ium-platin-(divinyltetramethyldisiloxan), 1,3-Bis-(2,6-dimethylphenyl)-3,4,5,6-tetrahydropyrimidin-1-ium-platin-(divinyltetramethyldisiloxan) und 1,3-Bis-(2-methylphenyl)-3,4,5,6-tetrahydropyrimidin-1-ium-platin-(divinyltetramethyldisiloxan).

Bevorzugt wird als Katalysator (C) der in der Literatur lange als Karstedt Katalysator bekannte Platin-1,3-Divinyl-1,1,3,3-tetramethyldisiloxan-Komplex (CAS 68478-92-2) eingesetzt.

Katalysator (C) wird in den erfindungsgemäßen Zubereitungen vorzugsweise in Mengen von 1 bis 5000 Gew.-ppm (Gewichtsteilen je Million Gewichtsteilen), bevorzugt in Mengen von 1 bis 2000 Gew.-ppm, insbesondere in Mengen von 1 bis 500 Gew.-ppm, jeweils berechnet als elementares Metall, bevorzugt elementares Platin, und bezogen auf das Gesamtgewicht der Komponenten (A) und ggf. (F), eingesetzt.

Ganz besonders bevorzugt wird in den erfindungsgemäßen Zubereitungen als Katalysator (C) Karstedt Katalysator (CAS 68478-92-2) in Mengen von 5 bis 100 Gew.-ppm, berechnet als elementares Platin und bezogen auf das Gesamtgewicht der Komponenten (A) und ggf. (F), eingesetzt.

In einer bevorzugten Ausführungsform wird Katalysator (C) im Gemisch mit Inhibitor (D) und ggf. mit organischem Lösungsmittel (E), besonders bevorzugt im Gemisch mit linearen vinylterminierten Polydimethylsiloxanen (D) und ggf. organischem Lösungsmittel (E), eingesetzt.

Zusätzlich zu den Komponenten (A), (B), (C) und gegebenenfalls (E), können die erfindungsgemäßen Zusammensetzungen weitere Stoffe enthalten, die unterschiedlich sind zu Komponenten (A), (B), (C) und (E), wie z.B. Inhibitoren (D), Reaktivweichmacher (F) und Zusatzstoffe (G).

Die erfindungsgemäßen Zusammensetzungen können Inhibitoren (D) enthalten, bei denen es sich um die gleichen handeln kann, die auch bisher in durch Hydrosilylierungsreaktion vernetzbaren Massen verwendet wurden und die Anlagerung von Si-gebundenem Wasserstoff an aliphatische Kohlenstoff-Kohlenstoff-Mehrfachbindungen bei Raumtemperatur verzögern bzw. mit denen die Verarbeitungszeit und Vernetzungsgeschwindigkeit gezielt eingestellt werden können.

Beispiele für gegebenenfalls eingesetzte Inhibitoren (D) sind acetylenische Alkohole, wie 1-Ethinylcyclohexan-1-ol, 3,5-Dimethyl-1-hexin-3-ol, 2-Phenyl-3-butin-2-ol und 2-Methyl-3-butin-2-ol, lineare vinylterminierte Polydimethylsiloxane, Trialkylcyanurate, Maleate, wie Diallylmaleat, Dimethylmaleat und Bis(2-methoxy-1-methylethyl)maleat, Alkylfumarate, wie Diethylfumarat und Diallylfumarat, organische Hydroperoxide, wie Cumolhydroperoxid, tert.-Butylhydroperoxid und Pinanhydroperoxid, organische Peroxide, organische Sulfoxide, organische Amine und Amide, Phosphine und Phosphite, Phosphonite, Phosphinite, Nitrile, Diaziridine und Oxime sowie Alkylthioharnstoffe, Thiurammonosulfide und -disulfide.

Bevorzugte Beispiele für gegebenenfalls eingesetzte Inhibitoren (D) sind acetylenische Alkohole, wie 1-Ethinylcyclohexan-1-ol, 3,5-Dimethyl-1-hexin-3-ol, 2-Phenyl-3-butin-2-ol und 2-Methyl-3-butin-2-ol, lineare vinylterminierte Polydimethylsiloxane, Trialkylcyanurate, Maleate, wie Diallylmaleat, Dimethylmaleat und Bis(2-methoxy-1-methylethyl)maleat, Alkylfumarate, wie Diethylfumarat und Diallylfumarat, organische Hydroperoxide, wie Cumolhydroperoxid, tert.-Butylhydroperoxid und Pinanhydroperoxid, organische Peroxide, Phosphine und Phosphite, Phosphonite, Phosphinite, Diaziridine und Oxime sowie Alkylthioharnstoffe, Thiurammonosulfide und -disulfide.

Besonders bevorzugt handelt es sich bei den gegebenenfalls eingesetzten Inhibitoren (D) um 1-Ethinylcyclohexan-1-ol oder Thiurammonosulfide, insbesondere um Thiurammonosulfide.

Falls Inhibitor (D) eingesetzt wird, handelt es sich um Mengen von vorzugsweise 5 bis 5000 Gew.-ppm, besonders bevorzugt von 10 bis 2000 Gew.-ppm, insbesondere von 20 bis 1000 Gew.-ppm, jeweils bezogen auf das Gesamtgewicht der Komponenten (A) und ggf. (F). Die erfindungsgemäßen Zusammensetzungen enthalten bevorzugt Inhibitor (D).

Die erfindungsgemäße additionsvernetzende Zusammensetzung kann so eingestellt werden, dass sie nach Vereinigung aller sie bildenden Einzelkomponenten bei Temperaturen von -50°C bis 30°C über längere Zeiträume, insbesondere mehrere Wochen bis mindestens 2 Monaten, bevorzugt bis zu mindestens 3 Monaten, besonders bevorzugt bis zu mindestens 4 Monaten, insbesondere bis zu mindestens 5 Monaten lagerstabil ist.

Ebenso ist es möglich die erfindungsgemäßen Zubereitungen so einzustellen, dass nach Vereinigung aller sie ausmachenden Komponenten nur eine begrenzte Verarbeitungszeit (Topfzeit) bis zur beginnenden Aushärtung verbleibt. Dazu wird entweder kein Inhibitor zugesetzt oder es wird beispielsweise 1-Ethinylcyclohexan-1-ol, 2-Methyl-3-butin-2-ol, 3-Methyl-1-pentin-3-ol, 2,5-Dimethyl-3-hexin-2,5-diol, 2,5-Dimethyl-1-hexin-3-ol oder 3,7-Dimethyloct-1-in-6-en-3-ol eingesetzt, welche die Additionsreaktion weniger stark inhibieren, wobei die Aufzählung der Inhibitoren hier nur beispielhaft und nicht limitierend zu verstehen ist.

Beispiele für gegebenenfalls eingesetztes Lösungsmittel (E) sind Ketone, wie Methyl-iso-butylketon, Methylethylketon, Methyl-iso-amylketon, Di-iso-butyl-keton, Aceton, Cyclohexanon, Diethylketon, 2-Hexanon, Acetylaceton und Butan-2,3-dion; Ester, wie Ethylacetat, Ethylenglykoldiacetat, gamma-Butyrolacton, 2-Methoxy-propylacetat (MPA), Di(propylenglycol)dibenzoat und Ethyl(ethoxy)propionat, Methylacetoacetat, Ethylacetoacetat, n-Butylacetoacetat, Methylacetat, n-, sec- oder tert-Butylacetat, 2-Hydroxypropionsäurebutylester, Propionsäureethylester, 2-Hydroxypropionsäureethylester und Maleinsäuredimethylester; Amide, wie N,N-Dimethylformamid, N,N-Dimethylacetamid, N-Methyl-2-pyrrolidon und N-Ethyl-2-pyrrolidon; Nitrile, wie Acetonitril, Propionitril, 3-Methoxypropionitril; Acetale, wie Methylal, Ethylhexylal, Butylal, 1,3-Dioxolan, 1,3,5-Trioxan und Glycerinformal; Ether, wie Methyl-tert-butylether, Tetrahydrofuran (THF), Diphenylether, Allylphenylether, Benzylphenylether, Cyclohexylphenylether, Methylphenylether, Tetrahydropyran, 4-Me¬thyltetrahydropyran, Butylphenylether, Dibenzylether, Anisol, 2-Methyltetrahydrofuran, Cyclopentylmethylether, Dibutylether, Diethylether, Mono-, Di-, Tri- oder Tetraethylenglycoldimethylether, Ethylenglycoldibutylether, Ethylmethylether und 1,4-Dioxan; Sulfoxide, wie Dimethylsulfoxid, Dipropylsulfoxid und Dibutylsulfoxid; gesättigte Kohlenwasserstoffe, wie n-Pentan, n-Hexan, Cyclohexan, n-Heptan, n-Octan und isomere Octane, wie 2-Ethylhexan, 2,4,4-Trimethylpentan, 2,2,4-Trimethylpentan und 2-Me-thylheptan, sowie Gemische gesättigter Kohlenwasserstoffe mit Siedebereichen zwischen 60-300°C, wie sie unter den Handelsnamen Exxsol™, Isopar™, Hydroseal® oder Shellsol® erhältlich sind; aromatische Kohlenwasserstoffe, wie Benzol, Toluol, o-, m- oder p-Xylol, Solvent Naphtha und Mesitylen;

Acetale, wie Methylal, Ethylhexylal, Butylal, 1,3-Dioxolan und Glycerinformal; Carbonate, wie 1,3-Dioxolan-2-on, Diethylcarbonat, Dimethylcarbonat, Di-propylcarbonat, Propylenglycolcarbonat und Ethylencarbonat; Chloroform; Dichlormethan; sowie Mischungen hiervon.

Falls die erfindungsgemäßen Zusammensetzungen Lösungsmittel (E) enthalten, handelt es sich bevorzugt um Ether, aromatische Kohlenwasserstoffe oder gesättigte Kohlenwasserstoffe, besonders bevorzugt um Toluol.

Falls die erfindungsgemäßen Zusammensetzungen Lösungsmittel (E) enthalten, handelt es sich um Mengen von bevorzugt 0,001 bis 30 Gewichtsteilen, besonders bevorzugt 0,001 bis 20 Gewichtsteilen, insbesondere 0,01 bis 10 Gewichtsteilen, jeweils bezogen auf 100 Gewichtsteile der Summe der Komponenten (A), (B) und (F). Die erfindungsgemäßen Zusammensetzungen enthalten bevorzugt kein Lösungsmittel (E).

Beispiele für gegebenenfalls eingesetzte Reaktivweichmacher (F) sind cyclische Siloxane mit 3 bis 6 Siliciumatomen und reaktiven aliphatischen Kohlenstoff-Kohlenstoff-Mehrfachbindungen, z.B. Vinylrest, wie z.B. 1,3,5,7-Tetramethyl-1,3,5,7-tetravinylcyclotetrasiloxan, 1,3,5-Trimethyl-1,3,5-trivinylcyclotrisiloxan, 1,3,5,7-Triphenyl-1,3,5,7-trivinylcyclotetrasiloxan oder 1,3,5,7-Tetraphenyl-1,3,5,7-tetravinylcyclotetrasiloxan.

Falls die erfindungsgemäßen Zusammensetzungen Komponente (F) enthalten, handelt es sich um Mengen von vorzugsweise 0,1 bis 200 Gewichtsteilen, bevorzugt 5 bis 100 Gewichtsteilen, besonders bevorzugt 5 bis 50 Gewichtsteilen, insbesondere 10 bis 30 Gewichtsteilen, jeweils bezogen auf 100 Gewichtsteile der Komponente (A).

Bei erfindungsgemäß gegebenenfalls eingesetzten Komponenten (G) handelt es sich um Weichmacher, Haftvermittler, Farbstoffe, anorganische und organische Pigmente, Fluoreszenzfarbstoffe, Fungizide, Duftstoffe, Dispergierhilfsmittel, rheologische Additive, Korrosionsinhibitoren, Oxidationsinhibitoren, Lichtschutzmittel, Hitzestabilisatoren, flammabweisend machende Mittel, Mittel zur Beeinflussung der Klebrigkeit, Mittel zur Beeinflussung der elektrischen Eigenschaften, Mittel zur Verbesserung der Wärmeleitfähigkeit; Modifikatoren zur Erhöhung der Festigkeit, der Glasübergangstemperatur und/oder Bruchzähigkeit; verstärkende und nicht verstärkende Füllstoffe; sowie Fasergewebe bestehend aus Glas, Kohlenstoff oder Kunststoff; oder Kombinationen hiervon.

Falls die erfindungsgemäßen Zusammensetzungen Komponente (G) enthalten, handelt es sich bevorzugt um Oxidationsinhibitoren, Lichtschutzmittel, Hitzestabilisatoren, Mittel zur Beeinflussung der elektrischen Eigenschaften, Mittel zur Verbesserung der Wärmeleitfähigkeit; Modifikatoren zur Erhöhung der Festigkeit, der Glasübergangstemperatur und/oder Bruchzähigkeit; verstärkende und nicht verstärkende Füllstoffe; sowie Fasergewebe bestehend aus Glas, Kohlenstoff oder Kunststoff; oder Kombinationen hiervon, besonders bevorzugt Oxidationsinhibitoren, Hitzestabilisatoren, Modifikatoren zur Erhöhung der Festigkeit, der Glasübergangstemperatur und/oder Bruchzähigkeit; verstärkende und nicht verstärkende Füllstoffe; sowie Fasergewebe bestehend aus Glas, Kohlenstoff oder Kunststoff; oder Kombinationen hiervon.

Falls die erfindungsgemäßen Zusammensetzungen Komponente (G) enthalten, handelt es sich um Mengen von bevorzugt 0,1 bis 200 Gewichtsteilen, besonders bevorzugt 0,1 bis 100 Gewichtsteilen, insbesondere 0,1 bis 50 Gewichtsteilen, jeweils bezogen auf 100 Gewichtsteile der Summe der Komponenten (A) und (B). Die erfindungsgemäßen Zusammensetzungen enthalten bevorzugt Komponente (G).

Vorzugsweise handelt es sich bei den erfindungsgemäßen Zusammensetzungen um solche, enthaltend

(A) Organopolysiloxane,
(B) Koppler,
(C) Katalysator,
gegebenenfalls (E) Lösungsmittel,
(D) Inhibitor,

gegebenenfalls (F) Reaktivweichmacher und
gegebenenfalls (G) weitere Bestandteile.

Bevorzugt handelt es sich bei den erfindungsgemäßen Zusammensetzungen um solche, enthaltend

(A) Organopolysiloxane,
(B) Koppler,
(C) Katalysator,
gegebenenfalls
(D) Inhibitor,
(E) Lösungsmittel,
(F) Reaktivweichmacher und
gegebenenfalls (G) weitere Bestandteile.

Besonders bevorzugt handelt es sich bei den erfindungsgemäßen Zusammensetzungen um solche, enthaltend

(A) Organopolysiloxan
(B) Koppler,
(C) Katalysator,
(D) Inhibitor,
gegebenenfalls
(E) Lösungsmittel,
(F) Reaktivweichmacher und
(G) weitere Bestandteile.

Insbesondere handelt es sich bei den erfindungsgemäßen Zusammensetzungen um solche, enthaltend

(A) Organopolysiloxane,
(B) Koppler, welcher pro Molekül mindestens einen Rest $R^5$ gleich einem zweiwertigen, SiC-gebundenen, aromatischen, gegebenenfalls substituierten, aliphatisch gesättigten Kohlenwasserstoffrest, der insbesondere zwei Einheiten der Formel (IX) miteinander verbindet, aufweist,
(C) Katalysator,
gegebenenfalls
(D) Inhibitor,
(E) Lösungsmittel,
(F) Reaktivweichmacher und
(G) weitere Bestandteile.

Ganz besonders bevorzugt handelt es sich bei den erfindungsgemäßen Zusammensetzungen um solche, enthaltend

(A) Organopolysiloxane,
(B) Koppler, welcher pro Molekül mindestens einen Rest $R^5$ gleich einem zweiwertigen, SiC-gebundenen, aromatischen, gegebenenfalls substituierten, aliphatisch gesättigten Kohlenwasserstoffrest, der insbesondere zwei Einheiten der Formel (IX) miteinander verbindet, aufweist,
(C) Katalysator,
gegebenenfalls
(D) Inhibitor,
(E) Lösungsmittel,
(F) Reaktivweichmacher und
(G) weitere Bestandteile.

Die erfindungsgemäßen Zusammensetzungen enthalten außer den Komponenten (A) bis (G) und eventuell entstehende Nebenprodukte, wie Disiloxane oder niedermolekulare oder hochmolekulare lineare oder verzweigte sowie niedermolekulare cyclische Strukturen, bevorzugt keine weiteren Bestandteile.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Die erfindungsgemäßen Zusammensetzungen weisen eine Viskosität von 10 bis 500 000 mPa.s, bevorzugt von 50 bis 100 000 mPa.s, besonders bevorzugt von 100 bis 50 000 mPa.s, jeweils bei 60°C, auf.

Die Herstellung der erfindungsgemäßen Zusammensetzungen kann nach bekannten Verfahren erfolgen, wie beispielsweise durch Mischen der einzelnen Komponenten in beliebiger Reihenfolge und auf bisher bekannte Art und Weise.

Ein weiterer Gegenstand der vorliegenden Erfindung ist ein Verfahren zur Herstellung der erfindungsgemäßen Zusammensetzungen durch Vermischen der einzelnen Komponenten.

Bei dem erfindungsgemäßen Verfahren kann das Vermischen bei Temperaturen im Bereich von bevorzugt 10 bis 40°C erfolgen. Falls erwünscht, kann das Vermischen aber auch bei höheren Temperaturen erfolgen, z.B. bei Temperaturen im Bereich von 40 bis 100°C, wobei der Zusammensetzung bevorzugt ein Inhibitor (D) hinzugefügt wird. Bevorzugt wird bei der Temperatur gemischt, die sich beim Vermischen bei Umgebungstemperatur aus der Temperatur der Rohstoffe plus der Temperaturerhöhung durch den Energieeintrag beim Mischen ergibt, wobei nach Bedarf geheizt oder gekühlt werden kann.

Das Vermischen kann beim Druck der umgebenden Atmosphäre, also etwa 900 bis 1100 hPa, erfolgen. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen oder bei Überdruck zu arbeiten, wie bei Drücken zwischen 1100 hPa und 3000 hPa Absolutdruck, insbesondere bei kontinuierlicher Arbeitsweise, wenn z.B. sich diese Drücke bei geschlossenen Systemen durch den Druck beim Pumpen und durch den Dampfdruck der eingesetzten Materialien bei erhöhten Temperaturen ergeben.

Das erfindungsgemäße Verfahren kann kontinuierlich, diskontinuierlich oder semikontinuierlich durchgeführt werden, bevorzugt wird es diskontinuierlich durchgeführt.

Bei einer bevorzugten Ausführungsform des erfindungsgemäßen Verfahrens zur Herstellung der Zusammensetzungen werden die Bestandteile (A), (B) und (C) sowie die gegebenenfalls eingesetzten Komponenten (E), (D), (F) und (G) in beliebiger Reihenfolge vermischt.

Besonders bevorzugt werden bei dem erfindungsgemäßen Verfahren die Komponenten (A) und (B) sowie die gegebenenfalls eingesetzten Komponenten (D), (E), (F) und (G) in beliebiger Reihenfolge vorgemischt und dann mit Komponente (C), gegebenenfalls als Mischung mit Komponenten (D) und (E), homogenisiert.

In einer bevorzugten Ausführungsform wird Komponente (A) nach der Herstellung einem weiteren Verarbeitungsschritt zur Reduzierung der Rest-(OR$^3$)-Gruppen unterworfen; dann wird Komponente (A) mit Komponente (B) sowie gegebenenfalls mit Komponenten (D), (E), (F) und (G) vorgemischt und anschließend mit Komponente (C), gegebenenfalls als Mischung mit Komponenten (D) und (E) homogenisiert.

Die erfindungsgemäßen bzw. erfindungsgemäß hergestellten Mischungen werden bevorzugt vor dem Aushärten entgast.

Die erfindungsgemäße Vernetzung erfolgt bevorzugt bei Temperaturen im Bereich von 50 bis 270°C, besonders bevorzugt von 70 bis 200°C, insbesondere von 140 bis 200°C. Ganz besonders bevorzugt erfolgt die erfindungsgemäße Vernetzung zunächst bei Temperaturen von 100 bis 200°C, woran sich ein Nachhärtungsschritt bei 210 bis 270°C anschließt.

Die erfindungsgemäße Vernetzung erfolgt bevorzugt beim Druck der umgebenden Atmosphäre, also etwa 900 bis 1100 hPa, sie kann aber auch bei erhöhtem Druck, also von 1200 hPa bis 10 MPa, erfolgen.

Die erfindungsgemäße Vernetzung kann unter Luft- oder Schutzgasatmosphäre, wie Stickstoff oder Argon, stattfinden. Bevorzugt findet die erfindungsgemäße Vernetzung bei Temperaturen bis 220°C unter Luftatmosphäre und bei Temperaturen über 220°C unter Schutzgasatmosphäre statt.

Ein weiterer Gegenstand der vorliegenden Erfindung sind Formkörper, hergestellt durch Vernetzung der erfindungsgemäßen Zusammensetzungen.

Die erfindungsgemäßen Formkörper weisen vorzugsweise einen Elastizitätsmodul, gemessen bei 23°C, größer 0,5 GPa, bevorzugt größer 0,8 GPa, besonders bevorzugt größer 1,0 GPa, insbesondere größer 1,3 GPa, auf.

Die erfindungsgemäßen Formkörper weisen bevorzugt eine Biegefestigkeit $\sigma_{fM}$, gemessen bei 23°C, größer 20 MPa, bevorzugt größer 30 MPa, besonders bevorzugt größer 40 MPa, insbesondere größer 45 MPa, auf.

Vorzugsweise weisen die erfindungsgemäßen Formkörper ein tan delta$_{max}$ von mindestens 0,400, bevorzugt von mindestens 0,500, besonders bevorzugt von mindestens 0,600, insbesondere von mindestens 0,700, auf.

Vorzugsweise weisen die erfindungsgemäßen Formkörper eine Halbwertsbreite ≤40°C, bevorzugt ≤35°C, besonders bevorzugt ≤30°C auf.

Vorzugsweise weisen die erfindungsgemäßen Formkörper im Druckversuch, gemessen bei 25°C, eine Druckfließspannung $\sigma_y$ auf, welche definiert ist als die Spannung, bei der zum ersten Mal ein Anstieg der Stauchung ohne einen Anstieg der Spannung erfolgt (siehe DIN EN ISO 604:2003-12, Kapitel 3.3.1) und an einem Spannungsmaximum in der Spannungs-/Stauchungskurve (siehe DIN EN ISO 604:2003-12, Kapitel 4, Bild 1; Kurve a) erkennbar ist, gefolgt von einem Abfall der Spannung bei weiterem Anstieg der Stauchung nach $\sigma_y$ (Dehnungserweichung).

Vorzugsweise weisen die erfindungsgemäßen Formkörper ein Fließverhältnis, gemessen bei 25°C, kleiner 1,40, bevorzugt kleiner 1,30, besonders bevorzugt kleiner 1,20, insbesondere kleiner 1,10, auf.

Die erfindungsgemäßen Formkörper haben den Vorteil, dass sie hohe Festigkeiten, d.h. hohe Elastizitätsmodul- und Biegefestigkeitswerte, mit guten Fließeigenschaften, d.h. ein niedriges Fließverhältnis $\sigma_{20\%}{:}\sigma_y$, und eine homogene Netzwerkstruktur, erkennbar an einem hohen Dämpfungsmaximum tan delta$_{max}$ bei der Glasübergangstemperatur (Tg) und einer geringen Halbwertsbreite, kombinieren.

Die erfindungsgemäß hergestellten Organopolysiloxane (A) haben den Vorteil, dass sie einfach herstellbar sind.

Ferner haben die erfindungsgemäßen Zusammensetzungen den Vorteil, dass sie bei 60°C flüssig und gut verarbeitbar sind.

**Ausführungsbeispiele**

**Herstellung der zylindrischen Probekörper**

Zur Durchführung der DMA, der Biegefestigkeits- und Druckversuch-Messungen wurden die Probekörper aus zylinderförmigen Vulkanisaten hergestellt. Die zylinderförmigen Vulkanisate wurden in Edelstahlröhrchen mit den Dimensionen Länge x Innendurchmesser = 150 mm x 10 mm, welche einseitig mit einer Schraubverschluss-Kappe aus Edelstahl verschlossen waren, hergestellt. Um ein Anhaften der Organopolysiloxan-Zusammensetzung zu vermeiden befand sich innenliegend im Schraubverschluss eine Bodendichtung aus Polytetrafluorethylen; die Innenflächen der Edelstahlröhrchen wurden mit WACKER® SILICONE PASTE P unter Zuhilfenahme einer passenden Reagenzglasbürste vor dem Einfüllen der Organopolysiloxan-Zusammensetzungen dünn benetzt, anschließend wurden die Röhrchen 2 Stunden bei 180°C gelagert. Danach wurden die Röhrchen mit der Organopolysiloxan-Zusammensetzung befüllt und 72 Stunden bei 180°C im Umluftofen und anschließend weitere 2 Stunden bei 250°C im Umluftofen mit Stickstoffatmosphäre ausgehärtet. Dabei wurden die Edelstahlröhrchen aufrecht mit der offenen Seite nach oben gerichtet aufgestellt. Anschließend ließ man die Probekörper in den Röhrchen auf 23°C abkühlen bevor die Probekörper entformt wurden. Für die weitere Verwendung wurden die oberen 20 mm der Probekörper-Seite, die während der Aushärtung offen war, verworfen.

**Dynamisch mechanische Analyse (DMA)**

Messbedingungen:

- Messgerät: ARES-Rheometer (TA-Instruments)
- Temperaturbereich: -100°C - 300°C
- Heizrate: 4 K/min mit Stickstoffspülung
- Frequenz: 1 Hz
- Strain: Initial 0,03 %, automatisch erhöht, wenn Messsignal unter Schwellenwert

Für die Untersuchungen wurden quaderförmige Prüfkörper in den Dimensionen Länge x Breite x Höhe = 40 mm x 6 mm x 3 mm aus den zylindrischen Probekörpern hergestellt; die resultierende Einspannlänge betrug 25 mm.
In der vorliegenden Schrift entspricht tan delta der Dämpfung, d.h. dem Tangens de Phasenwinkels bzw. dem Verhältnis von Verlustmodul G" zu Speichermodul G'; tan delta$_{max}$ ist definiert als das Dämpfungsmaximum (= Höchstwert der Tangens delta-Kurve) tan delta bei der Glasübergangstemperatur Tg.
In der vorliegenden Schrift ist die Halbwertsbreite definiert als die Peakbreite der tan delta-Kurve in °C bei tan delta$_{max}$/2. Der in Tabelle 1 angegebene Wert für tan delta$_{max}$ wurde auf die dritte Nachkommastelle und der angegebene Wert für die Halbwertsbreite auf ganze Zahlen gerundet, jeweils entsprechend DIN 1333:1992-02 Abschnitt 4.

**Druckversuch**

Im Rahmen der vorliegenden Erfindung wurden die Druckeigenschaften (Fließspannung) in Anlehnung an die Norm DIN EN ISO 604:2003-12 durchgeführt.
Messbedingungen:

- Messgerät: Instron Prüfmaschine 3369
- Kraftmessdose: 50 kN
- Druckstempel 50 mm,
- Prüfgeschwindigkeit: 1 mm/min
- Temperatur: 25°C, 28% rel. Feuchte
- Vorkraft: 40 N
- Schmiermittel: ohne

Probenvorbereitung: Für die Untersuchungen wurden zylindrische Prüfkörper mit einem Durchmesser von 9,5 mm und mit einer Höhe von 17 mm hergestellt. Der Druckversuch wurde an 3 Prüfkörpern eines Probekörpers durchgeführt. Die Probekörper wurden bis etwa 4,5 mm Stauchung, also etwa 26% bezogen auf die Ausgangshöhe, belastet und verformten sich bis zum Ende der Messung praktisch ideal tonnenförmig (bauchig). Zur Beurteilung der Material-Fließeigenschaft wurde das Fließverhältnis, definiert als der Quotient von der Druckspannung $\sigma$ in MPa bei 20% Stauchung und der Druckfließspannung $\sigma_y$ (siehe DIN EN ISO 604:2003-12, Kapitel 3.3.1) herangezogen. Der in Tabelle 1 angegebene Wert für das Fließverhältnis entspricht dem jeweiligen Mittelwert der drei Einzelmessungen, gerundet auf die zweite Nachkommastelle entsprechend DIN 1333:1992-02 Abschnitt 4.

**Biegefestigkeit**

In der vorliegenden Erfindung wurde die Biegefestigkeit nach ISO 178:2011-04 Verfahren A mit einer Prüfgeschwindigkeit von 5 mm/min bei einer Auflagedistanz von 60 mm gemessen. Die Messungen wurden bei 23°C und 50% relative Feuchte durchgeführt. Dabei wurde bevorzugt wie folgt vorgegangen: Es wurden zylinderförmige Prüfkörper in den Dimensionen Länge x Durchmesser = 100 mm x 9,5 mm verwendet. Die Messungen wurden an jeweils 5 Prüfkörpern

durchgeführt. Die Biegefestigkeit $\sigma_{fM}$ (maximale Biegespannung, die während der Prüfung von dem Probekörper ertragen wird (siehe ISO 178:2011-04, Seite 6, Kapitel 3.4)) wurde berechnet nach der Gleichung $\sigma_{fm} = \frac{6 \times L \times \sigma_f}{\pi \times \emptyset^3}$, wobei L die Auflagedistanz von 60 mm, $\sigma_f$ die gemessene Biegespannung in Newton und $\emptyset$ der Probekörperdurchmesser in mm ist. Der Biege-Elastizitätsmodul $E_f$ wurde berechnet nach der Gleichung $E_f = \frac{L^3 \times (\sigma_{f2} - \sigma_{f1})}{0,15\ mm \times \pi \times \emptyset^4}$, wobei L die Auflagedistanz von 60 mm, $\sigma_{f1}$ die gemessene Biegespannung bei 0,10 mm Durchbiegung in Kilonewton (kN), $\sigma_{f2}$ die gemessene Biegespannung bei 0,25 mm Durchbiegung in Kilonewton (kN) und $\emptyset$ der Probekörperdurchmesser in mm ist. Der in Tabelle 1 angegebene Wert für die Biegefestigkeit $\sigma_{fM}$ in MPa und den Biege-Elastizitätsmodul Ef in GPa entspricht dem jeweiligen Mittelwert der Einzelmessungen, gerundet auf ganze Zahlen (Biege-Elastizitätsmodul) bzw. auf eine Nachkommastelle (Biegefestigkeit) entsprechend DIN 1333:1992-02 Abschnitt 4.

**Molmassen**

Im Rahmen der vorliegenden Erfindung werden die Zahlenmittel-Molmasse Mn und die Gewichtsmittel-Molmasse Mw, jeweils in der Einheit g/mol, gerundet auf ganze 10er Zahlen entsprechend DIN 1333:1992-02 Abschnitt 4, mit Größenausschlusschromatographie (SEC/GPC) entsprechend DIN 55672-1/ISO 160414-1 sowie ISO 160414-3 bestimmt, indem ein Säulensatz basierend auf Polystyrol-co-Divinylbenzol als stationärer Phase aus drei Säulen unterschiedlicher Porengrößenverteilung der Reihenfolge nach 10000 Å, 500 Å und 100 Å mit einer Ausschlussgröße von größer als 450,000 g/mol gegen Polystyrol-Standards kalibriert wird. Phenyl-haltige Komponenten werden mit THF als Eluent bestimmt, nicht-phenyl-haltige mit Toluol als Eluent. Die Analysen werden bei einer Säulentemperatur von 45 ± 1°C und mittels Brechungsindex-Detektor durchgeführt.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1013 hPa, und bei Raumtemperatur, also etwa 23°C bzw. einer Temperatur, die sich beim Zusammengeben der Reaktanden bei Raumtemperatur ohne zusätzliche Heizung oder Kühlung einstellt, durchgeführt.

Im Folgenden bedeutet

Me gleich Methylrest, Vi gleich Vinylrest, Et gleich Ethylrest, Ph gleich Phenylrest.

**Herstellung der Siloxankomponente 1**

100 g (504 mmol) Phenyltrimethoxysilan (CAS 2996-92-1; käuflich erhältlich unter der Bezeichnung GENIOSIL® XL 70 bei der Wacker Chemie AG, D-München) wurden mit 30,13 g (1673 mmol) deionisiertem Wasser vermischt, dann wurde so viel wasserfreies Aceton hinzugefügt (71 g) bis eine homogene Lösung entstand. Anschließend wurden zu der Mischung 0,60 g (4,4 mmol) festes Kaliumcarbonat (CAS 584-08-7; käuflich erhältlich bei der Sigma-Aldrich Chemie GmbH, D-Steinheim) und nach 45 Minuten rühren 21 g (161 mmol) Vinyldimethylethoxysilan (CAS 5356-83-2; käuflich erhältlich bei der abcr GmbH, D-Karlsruhe) hinzugefügt. Die Mischung wurde 12 Stunden bei 23°C gerührt, dann wurden 100 ml Trichlormethan hinzugefügt und anschließend wurde 3x mit jeweils 200 ml deionisiertem Wasser ausgeschüttelt. Die organische Phase wurde abgetrennt und über Magnesiumsulfat getrocknet. Anschließend wurden die volatilen Bestandteile abdestilliert und der Rückstand bei 100°C und 1 mbar 1 Stunde entflüchtigt. Nach dem Abkühlen auf 23°C wurde, 65,11 g eines farblosen Feststoffs mit der mittleren Zusammensetzung $(PhSiO_{3/2})_{0,76}(PhSi(OH)O_{2/2})_{0,04}(PhSi(OMe)O_{2/2})_{0,01}(ViMe_2SiO_{1/2})_{0,19}$ erhalten, einem Gewichtsmittel Mw von 1420 g/mol, einem Zahlenmittel Mn von 1220 g/mol und einer Polydispersität Mw/Mn von 1,17, erhalten.

Unter Stickstoffatmosphäre wurden 65,00 g dieses Feststoffs in 200 ml wasserfreies Toluol (CAS 108-88-3; käuflich erhältlich bei der Sigma-Aldrich Chemie GmbH, D-Steinheim) gelöst. Anschließend wurde eine Mischung von 4,07 g 1,3-Divinyltetramethyldisilazan (CAS 2627-95-4; käuflich erhältlich bei der Sigma-Aldrich Chemie GmbH, D-Steinheim) und 2,63 g Chlor(dimethyl)vinylsilan (CAS 1719-58-0; käuflich erhältlich bei der Sigma-Aldrich Chemie GmbH, D-Steinheim) hinzugefügt; die Mischung wurde 12 Stunden bei 23°C und anschließend 1 Stunde bei 70°C gerührt. Nach dem Abkühlen auf 23°C wurde filtriert, das Filtrat wurde 3x mit jeweils 150 ml deionisiertem Wasser gewaschen und anschließend über Natriumsulfat getrocknet. Danach wurden die volatilen Bestandteile abdestilliert und der Rückstand bei 80°C und 1 mbar 1 Stunde entflüchtigt. Nach dem Abkühlen auf 23°C wurden 61,31 g eines farblosen Feststoffs mit der mittleren Zusammensetzung $(PhSiO_{3/2})_{0,78}(PhSi(OMe)O_{2/2})_{0,01}(ViMe_2SiO_{1/2})_{0,21}$, einem Gewichtsmittel Mw von 1480 g/mol, einem Zahlenmittel Mn von 1240 g/mol und einer Polydispersität Mw/Mn von 1,19 erhalten.

**Beispiel 1**

50,00 g Organopolysiloxan 1 wurden mit 8,78 g 1,4-Bis(dimethylsilyl)benzol (CAS 2488-01-9; käuflich erhältlich bei der abcr GmbH, D-Karlsruhe) und 0,10 g 1-Ethinylcyclohexan-1-ol (CAS 78-27-3, käuflich erhältlich bei der Sigma-Aldrich Chemie GmbH, D-Steinheim) vermischt und bei 60°C in einem Ultraschallbad homogenisiert. Anschließend wurden 0,05 g Platinkatalysator (käuflich erhältlich unter der Bezeichnung WACKER® KATALYSATOR OL bei der Wacker Chemie AG, D-München) hinzugefügt und bei 50°C homogen eingemischt. Die Mischung wurde dann bei 50°C auf 100 mPa entgast und nach dem Brechen des Vakuums mit Stickstoff sofort in die auf 100°C vorgeheizten Edelstahlzylinderformen gegossen und ausgehärtet. Die Ergebnisse der Messungen sind in Tabelle 1 zusammengefasst.

**Beispiel 2**

50,00 g Organopolysiloxan 1 wurden mit 10,00 g 1,3,5,7-Tetramethyl-1,3,5,7-tetravinylcyclotetrasiloxan (CAS 2554-06-5, käuflich erhältlich bei der Sigma-Aldrich Chemie GmbH, D-Steinheim), 20,62 g 1,4-Bis(dimethylsilyl)benzol und 0,10 g 1-Ethinylcyclohexan-1-ol vermischt und bei 50°C in einem Ultraschallbad homogenisiert. Anschließend wurden 0,05 g Platinkatalysator WACKER® KATALYSATOR OL hinzugefügt und bei Umgebungstemperatur homogen eingemischt. Die Mischung wurde dann auf 100 mPa entgast und nach dem Brechen des Vakuums mit Stickstoff sofort in die auf 100°C vorgeheizten Edelstahlzylinderformen gegossen und ausgehärtet. Die Ergebnisse der Messungen sind in Tabelle 1 zusammengefasst.

Tabelle 1

| Beispiel | 1 | 2 |
|---|---|---|
| Biege-Elastizitätsmodul bei 23°C [GPa] | 1,3 | 1,1 |
| Biegefestigkeit $\sigma_{fM}$ bei 23°C [MPa] | 45 | 47 |
| tan delta$_{max}$ | 0,981 | 0,891 |
| Halbwertsbreite [°C] | 27 | 21 |
| Fließverhältnis $\sigma_{20\%} : \sigma_y$ bei 25°C | 0,99 | 1,03 |

**Patentansprüche**

1.  Durch Hydrosilylierungsreaktion vernetzbare Zusammensetzungen enthaltend

    (A) Organopolysiloxane bestehend aus Einheiten der Formeln

    $$R_2R^1SiO_{1/2} \qquad (V),$$

    $$R^2SiO_{3/2} \qquad (VI)$$

    sowie gegebenenfalls Einheiten ausgewählt aus der Gruppe bestehend aus Einheiten der Formeln

    $$R^2(OR^3)SiO_{2/2} \qquad (VII)$$

    und

    $$R^2(OR^3)_2SiO_{1/2} \qquad (VIII),$$

    worin

    R gleich oder verschieden sein kann und von aliphatischen Kohlenstoff-Kohlenstoff-Mehrfachbindungen freie Kohlenwasserstoffreste bedeutet,
    $R^1$ einwertige Kohlenwasserstoffreste mit aliphatischen Kohlenstoff-Kohlenstoff-Mehrfachbindungen bedeutet,
    $R^2$ von aliphatischen Kohlenstoff-Kohlenstoff-Mehrfachbindungen freie, aromatische Kohlenwasserstoffreste bedeutet und

$R^3$ gleich oder verschieden sein kann und Wasserstoffatom oder Alkylrest bedeutet und

mit der Maßgabe, dass

in den Organopolysiloxanen (A) die Summe der Einheiten der Formel (V), bezogen auf die Summe aller Einheiten der Formeln (V), (VI), (VII) und (VIII), 0,15 bis 0,24 beträgt,

in den Organopolysiloxanen (A) die Summe der Einheiten der Formeln (VII) und (VIII), bezogen auf die Summe aller Einheiten der Formeln (V), (VI), (VII) und (VIII), höchstens 0,08 beträgt,

Organopolysiloxane (A) durchschnittlich 10 bis 20 Siliciumatome enthalten,

Organopolysiloxane (A) eine Polydispersität Mw/Mn von 1,05 bis 1,40 und ein Gewichtsmittel Mw von 1350 bis 1850 g/mol aufweisen bei Messung nach der Beschreibung, und

Organopolysiloxane (A) pro Molekül eine durchschnittliche Anzahl an Resten $R^1$, angegeben in mol($R^1$)/mol, von 1,1 bis 3,8 aufweisen,

(B) Organosiliciumverbindungen mit zwei Si-gebundenen Wasserstoffatomen enthaltend Einheiten der Formel

$$R^4_e H_f R^5_g SiO_{(4-e-f-g)/2} \qquad (IX),$$

worin

$R^4$ gleich oder verschieden sein kann und einen einwertigen oder zweiwertigen, SiC-gebundenen, gegebenenfalls substituierten, gesättigten Kohlenwasserstoffrest bedeutet,

$R^5$ gleich oder verschieden sein kann und einen einwertigen oder zweiwertigen, SiC-gebundenen, gegebenenfalls substituierten, aromatischen, aliphatisch gesättigten Kohlenwasserstoffrest bedeutet,

e 0, 1, 2 oder 3 ist,

f 0, 1 oder 2 ist und

g 0, 1 oder 2 ist,

mit der Maßgabe, dass e+f+g = 4 ist und pro Molekül zwei Si-gebundene Wasserstoffatome anwesend sind,

und

(C) die Anlagerung von Si-gebundenem Wasserstoff an aliphatische Mehrfachbindung fördernde Katalysatoren.

**2.** Zusammensetzungen gemäß Anspruch 1, **dadurch gekennzeichnet, dass** es sich bei den Organopolysiloxanen (A) um solche hergestellt durch Umsetzung (Verfahren A) von

(i) Organylalkoxysilanen der allgemeinen Formeln

$$R_2 R^1 (OR^3)Si \qquad (III)$$

und

$$R^2(OR^3)_3Si \qquad (IV),$$

wobei R, $R^1$, $R^2$ und $R^3$ die oben genannte Bedeutung haben,

mit

(ii) Wasser in Mengen von 1,0 bis 10,0 Mol, bezogen auf 1 Mol Organylalkoxysilan (i) der Formel (IV),

in Gegenwart von

(iii) basischer Verbindung,

in Anwesenheit von

(iv) mit Wasser mischbaren organischen Lösungsmitteln.

**3.** Zusammensetzungen gemäß einem oder mehreren der Ansprüche 1 bis 2, **dadurch gekennzeichnet, dass** es sich bei Koppler (B) um Organosiliciumverbindungen enthaltend Einheiten der Formel (IX) handelt mit mindestens einem Rest $R^5$.

**4.** Zusammensetzungen gemäß einem oder mehreren der Ansprüche 1 bis 3, **dadurch gekennzeichnet, dass** es sich um solche handelt, enthaltend

(A) Organopolysiloxane,

(B) Koppler

(C) Katalysator,
gegebenenfalls (E) Lösungsmittel,
(D) Inhibitor,

gegebenenfalls (F) Reaktivweichmacher und
gegebenenfalls (G) weitere Bestandteile.

5. Verfahren zur Herstellung der Zusammensetzungen gemäß einem oder mehreren der Ansprüche 1 bis 4 durch Vermischen der einzelnen Komponenten.

6. Verfahren nach Anspruch 5, **dadurch gekennzeichnet, dass** Komponente (A) nach der Herstellung einem weiteren Verarbeitungsschritt zur Reduzierung der Rest- $(OR^3)$ -Gruppen unterworfen und dann mit Komponente (B) sowie gegebenfalls mit Komponenten (D), (E), (F) und (G) vorgemischt und anschließend mit Komponente (C), gegebenenfalls als Mischung mit Komponenten (D) und (E) homogenisiert wird.

7. Formkörper, hergestellt durch Vernetzung der Zusammensetzungen gemäß einem oder mehreren der Ansprüche 1 bis 4.

8. Formkörper gemäß Anspruch 7, **dadurch gekennzeichnet, dass** sie einen Elastizitätsmodul, bei Messung nach der Beschreibung , größer 0,5 GPa aufweisen.

**Claims**

1. Hydrosilylation-crosslinkable compositions containing

(A) organopolysiloxanes consisting of units of formulae

$$R_2R^1SiO_{1/2} \qquad (V),$$

$$R^2SiO_{3/2} \qquad (VI)$$

and optionally units selected from the group consisting of units of formulae

$$R^2(OR^3)SiO_{2/2} \qquad (VII)$$

and

$$R^2(OR^3)_2SiO_{1/2} \qquad (VIII),$$

wherein

R may be identical or different and represents hydrocarbon radicals free from aliphatic carbon-carbon multiple bonds,
$R^1$ represents monovalent hydrocarbon radicals having aliphatic carbon-carbon multiple bonds,
$R^2$ represents aromatic hydrocarbon radicals free from aliphatic carbon-carbon multiple bonds and
$R^3$ may be identical or different and represents hydrogen or alkyl and
with the proviso that
in the organopolysiloxanes (A) the sum of the units of formula (V), based on the sum of all units of formulae (V), (VI), (VII) and (VIII), is 0.15 to 0.24,
in the organopolysiloxanes (A) the sum of the units of formulae (VII) and (VIII), based on the sum of all units of formulae (V), (VI), (VII) and (VIII), is not more than 0.08,
organopolysiloxanes (A) contain an average of 10 to 20 silicon atoms,
organopolysiloxanes (A) have a polydispersity Mw/Mn of 1.05 to 1.40 and a weight-average Mw of 1350 to 1850 g/mol upon measurement according to the description, and organopolysiloxanes (A) have an average number of radicals $R^1$ per molecule, reported in mol($R^1$)/mol, of 1.1 to 3.8,

(B) organosilicon compounds having two Si-bonded hydrogen atoms containing units of formula

$$R^4{}_eH_fR^5{}_gSiO_{(4-e-f-g)/2} \qquad (IX),$$

wherein

$R^4$ may be identical or different and represents a monovalent or divalent, SiC-bonded, optionally substituted, saturated hydrocarbon radical,

$R^5$ may be identical or different and represents a monovalent or divalent, SiC-bonded, optionally substituted, aliphatically saturated aromatic hydrocarbon radical,

e is 0, 1, 2 or 3,

f is 0, 1 or 2 and

g is 0, 1 or 2,

with the proviso that e+f+g = 4 and two Si-bonded hydrogen atoms are present per molecule,

and

(C) catalysts which promote addition of Si-bonded hydrogen onto an aliphatic multiple bond.

2. Compositions according to Claim 1, **characterized in that** the organopolysiloxanes (A) are those produced by reaction (process A) of

(i) organylalkoxysilanes of general formulae

$$R_2R^1(OR^3)\,Si \qquad (III)$$

and

$$R^2(OR^3)_3Si \qquad (IV),$$

wherein R, $R^1$, $R^2$ and $R^3$ are as defined above,

with

(ii) water in amounts of 1.0 to 10.0 mol, based on 1 mol of organylalkoxysilane (i) of formula (IV),

in the presence of

(iii) base,

in the presence of

(iv) water-miscible organic solvents.

3. Compositions according to one or more of Claims 1 to 2, **characterized in that** coupler (B) comprises organosilicon compounds containing units of formula (IX) having at least one radical $R^5$.

4. Compositions according to one or more of Claims 1 to 3, **characterized in that** they are compositions containing

(A) organopolysiloxanes,

(B) coupler,

(C) catalyst,

optionally (E) solvent,

(D) inhibitor,

optionally (F) reactive plasticizer and

optionally (G) further constituents.

5. Process for producing the compositions according to one or more of Claims 1 to 4 by mixing the individual components.

6. Process according to Claim 5, **characterized in that** after production component (A) is subjected to a further processing step to reduce the residual $(OR^3)$ groups and then premixed with component (B) and optionally with components (D), (E), (F) and (G) and subsequently homogenized with component (C), optionally as a mixture with components (D) and (E).

7. Molded articles produced by crosslinking the compositions according to one or more of Claims 1 to 4.

8. Molded articles according to Claim 7, **characterized in that** they have an elastic modulus of greater than 0.5 GPa upon measurement according to the description.

**Revendications**

1. Compositions réticulables par une réaction d'hydrosilylation, contenant

    (A) des organopolysiloxanes constitués par des motifs de formule

    $$R_2R^1SiO_{1/2} \qquad (V),$$

    $$R^2SiO_{3/2} \qquad (VI)$$

    ainsi que le cas échéant par des motifs choisis dans le groupe constitué par des motifs des formules

    $$R^2(OR^3)SiO_{2/2} \qquad (VII)$$

    et

    $$R^2(OR^3)_2SiO_{1/2} \qquad (VIII),$$

    dans lesquelles

    R peut être identique ou différent et signifie des radicaux hydrocarbonés exempts de liaisons carbone-carbone multiples aliphatiques,
    $R^1$ signifie des radicaux hydrocarbonés monovalents, présentant des liaisons carbone-carbone multiples aliphatiques,
    $R^2$ signifie des radicaux hydrocarbonés aromatiques, exempts de liaisons carbone-carbone multiples aliphatiques et
    $R^3$ peut être identique ou différent et signifie un atome d'hydrogène ou un radical alkyle et

    étant entendu que

    dans les organopolysiloxanes (A), la somme des motifs de formule (V), par rapport à la somme de tous les motifs des formules (V), (VI), (VII) et (VIII), vaut 0,15 à 0,24,
    dans les organopolysiloxanes (A), la somme des motifs des formules (VII) et (VIII), par rapport à la somme de tous les motifs des formules (V), (VI), (VII) et (VIII), vaut au plus 0,08,
    les organopolysiloxanes (A) contiennent en moyenne 10 à 20 atomes de silicium,
    les organopolysiloxanes (A) présentent une polydispersité Mw/Mn de 1,05 à 1,40 et une moyenne en poids Mw de 1350 à 1850 g/mole lors d'une mesure selon la description et
    les organopolysiloxanes (A) présentent par molécule un nombre moyen des radicaux $R^1$, indiqué en mole de $(R^1)$/mole, de 1,1 à 3,8,

    (B) des composés organosiliciés présentant deux atomes d'hydrogène liés par Si, contenant des motifs de formule

    $$R^4_eH_fR^5_gSiO_{(4-e-f-g)/2} \qquad (IX),$$

    dans laquelle

    $R^4$ peut être identique ou différent et représente un radical hydrocarboné monovalent ou divalent, lié par SiC, le cas échéant substitué, saturé,
    $R^5$ peut être identique ou différent et signifie un radical hydrocarboné aromatique, aliphatiquement saturé, monovalent ou divalent, lié par SiC, le cas échéant substitué,
    e vaut 0, 1, 2 ou 3,
    f vaut 0, 1 ou 2 et
    g vaut 0, 1 ou 2,

étant entendu que e + f + g = 4 et que deux atomes d'hydrogène liés par Si sont présents par molécule et
(C) des catalyseurs favorisant l'addition d'hydrogène lié par Si sur une liaison multiple aliphatique.

2.  Compositions selon la revendication 1, **caractérisées**
    **en ce qu'**il s'agit, pour les organopolysiloxanes (A), de ceux préparés par transformation (procédé A) de

    (i) organylalcoxysilanes des formules générales 0}

$$R_2R^1(OR^3)Si \qquad (III)$$

    et

$$R^2(OR^3)_3Si \qquad (IV),$$

    R, $R^1$, $R^2$ et $R^3$ présentant la signification susmentionnée, avec
    (ii) de l'eau en des quantités de 1,0 à 10,0 moles, par rapport à 1 mole d'organylalcoxysilane (i) de formule (IV),
    en présence d'un
    (iii) composé basique,
    en présence de
    (iv) solvants organiques miscibles à l'eau.

3.  Compositions selon l'une ou plusieurs des revendications 1 à 2, **caractérisées**
    **en ce qu'**il s'agit, pour l'agent de couplage (B), de composés organosiliciés contenant des motifs de formule (IX)
    présentant au moins un radical $R^5$.

4.  Compositions selon l'une ou plusieurs des revendications 1 à 3, **caractérisées**
    **en ce qu'**il s'agit de compositions contenant

    (A) des organopolysiloxanes,
    (B) un agent de couplage,
    (C) un catalyseur,
    le cas échéant (E) des solvants
    (D) un inhibiteur,

    le cas échéant (F) des plastifiants réactifs et
    le cas échéant (G) d'autres constituants.

5.  Procédé pour la préparation des compositions selon l'une ou plusieurs des revendications 1 à 4 par mélange des
    différents composants.

6.  Procédé selon la revendication 5, **caractérisé en ce que** le composant (A) est soumis, après la préparation, à une
    autre étape de transformation pour la réduction des groupes $(OR^3)$ résiduels et est ensuite prémélangé avec le
    composant (B) ainsi que le cas échéant avec les composants (D), (E), (F) et (G) et ensuite homogénéisé avec le
    composant (C), le cas échéant sous forme de mélange avec les composants (D) et (E).

7.  Corps façonnés, préparés par réticulation des compositions selon l'une ou plusieurs des revendications 1 à 4.

8.  Corps façonnés selon la revendication 7, **caractérisés**
    **en ce qu'**ils présentent un module d'élasticité, lors d'une mesure selon la description, supérieur à 0,5 GPa.

**IN DER BESCHREIBUNG AUFGEFÜHRTE DOKUMENTE**

**In der Beschreibung aufgeführte Patentdokumente**

- US 6689859 B
- US 6310146 B
- US 8927673 B
- WO 2014065432 A1
- US 2011177342 A1
- US 2008318067 A1
- EP 110370 B

**In der Beschreibung aufgeführte Nicht-Patentliteratur**

- *CHEMICAL ABSTRACTS*, 775-12-2
- *CHEMICAL ABSTRACTS*, 766-08-5
- *CHEMICAL ABSTRACTS*, 6689-22-1
- *CHEMICAL ABSTRACTS*, 2488-01-9
- *CHEMICAL ABSTRACTS*, 849830-54-2
- *CHEMICAL ABSTRACTS*, 873311-51-4
- *CHEMICAL ABSTRACTS*, 400758-55-6
- *CHEMICAL ABSTRACTS*, 68478-92-2
- *CHEMICAL ABSTRACTS*, 2996-92-1
- *CHEMICAL ABSTRACTS*, 584-08-7
- *CHEMICAL ABSTRACTS*, 5356-83-2
- *CHEMICAL ABSTRACTS*, 108-88-3
- *CHEMICAL ABSTRACTS*, 2627-95-4
- *CHEMICAL ABSTRACTS*, 1719-58-0
- *CHEMICAL ABSTRACTS*, 78-27-3
- *CHEMICAL ABSTRACTS*, 2554-06-5